(19) Europäisches Patentamt
European Patent Office
Office européen des brevets

(11) **EP 0 762 086 B1**

(12) **EUROPÄISCHE PATENTSCHRIFT**

(45) Veröffentlichungstag und Bekanntmachung des Hinweises auf die Patenterteilung:
**17.10.2001 Patentblatt 2001/42**

(51) Int Cl.$^7$: **G01F 1/66**

(21) Anmeldenummer: **96110153.2**

(22) Anmeldetag: **24.06.1996**

(54) **Verfahren zur Ultraschall-Messung von Durchflussmengen von strömenden Fluiden**

Method for the ultrasonic measurement of flowrate of flowing fluids

Procédé pour la mesure par ultrasons du débit des fluides en écoulement

(84) Benannte Vertragsstaaten:
**AT BE CH DE DK ES FR GB IT LI NL SE**

(30) Priorität: **16.08.1995 DE 19530054**

(43) Veröffentlichungstag der Anmeldung:
**12.03.1997 Patentblatt 1997/11**

(73) Patentinhaber: **Hydrometer GmbH**
**D-91522 Ansbach (DE)**

(72) Erfinder: **Gaugler, Ulrich**
**91746 Weidenbach (DE)**

(74) Vertreter: **Matschkur, Lindner Blaumeier**
**Patent- und Rechtsanwälte**
**Dr.-Kurt-Schumacher-Strasse 23**
**90402 Nürnberg (DE)**

(56) Entgegenhaltungen:
**EP-A- 0 452 531          EP-A- 0 496 953**
**EP-A- 0 498 141          DE-C- 4 322 849**

• **PATENT ABSTRACTS OF JAPAN vol. 012, no. 451 (P-791), 28.November 1988 & JP 63 173920 A (TOKYO KEIKI CO LTD)**

## Beschreibung

Die Erfindung betrifft ein Verfahren zur Ultraschall-Messung von Durchflußmengen von strömenden Fluiden, bei dem zwei in einer Meßstrecke für das strömende Fluid stromauf- und stromabwärts angeordnete kombinierte Sende- und Empfangswandler abwechselnd mit einer mittels eines Generators generierten Ultraschallfrequenz beaufschlagt werden und wechselweise analoge, das Fluid in und gegen die Strömungsrichtung durchlaufende Signale empfangen, anhand welcher im Rahmen von Zeitdifferenzmessungen die Durchflußmenge bestimmt wird.

Für die Ultraschall-Messung in Fluiden werden üblicherweise an beiden Enden der durchströmten Meßstrecke einer vorbestimmten Länge Ultraschallwandler, die als kombinierte Sende- und Empfangswandler ausgebildet sind, angeordnet. Beide werden simultan mit einer Ultraschallfrequenz in Form eines Ultraschall-Burst von 5 bis 100 Perioden beaufschlagt. Die Ultraschallfrequenz liegt vorzugsweise im Bereich von 1 MHz. Anschließend wird die Zeitdifferenz zwischen vorbestimmten Pegeln einer bestimmten Periode, üblicherweise den Nulldurchgängen, aus dem Ultraschallpaket der wechselweise empfangenen Signale beider Wandler gemessen. Da diese Zeitdifferenz näherungsweise proportional zur mittleren Fließgeschwindigkeit des Fluids ist, kann so der Durchfluß rechnerisch ermittelt werden. Bei dieser Messung aber besteht das Problem, daß sich während der Sendephase im Einkoppelraum, also wandlerseitig, reflektierte Signale während der Empfangsphase dem jeweiligen Empfangssignal überlagern können. Dies verursacht durchfluß- und temperaturabhängige Fehler, die nicht kompensierbar sind.

Ein weiteres bekanntes Verfahren zur Ermittlung des Durchflusses ist das sogenannte "Time of Flight" (TOF)-Verfahren. Bei diesem Verfahren wird die Absolutlaufzeit eines Signals in beide Richtungen gemessen, woraus die Fließgeschwindigkeit errechnet wird. Hier werden im Gegensatz zum vorher beschriebenen Verfahren die Wandler nicht simultan, sondern abwechselnd, also einzeln mit der Ultraschallfrequenz beaufschlagt. Der Nachteil dieser Methode besteht darin, daß ein bestimmter Nulldurchgang (vorzugsweise der erste) nur sehr schwer zu detektieren ist, da bei herkömmlichen Wandlern die Anstiegszeit zwischen 5 und 10 Perioden umfaßt. Außerdem variiert die Höhe der Empfangsspannung um etwa einen Faktor 2 bis 5, so daß eine spannungsabhängige Detektion versagen muß.

Der Erfindung liegt somit das Problem zugrunde, ein Ultraschall-Meßverfahren für Durchflußmengen zu schaffen, das eine sichere, störungsfreie und weitestgehend fehlerfreie Durchflußmengenmessung ohne die eingangs geschilderten Schwierigkeiten ermöglicht.

Zur Lösung dieses Problems ist bei dem eingangs genannten Verfahren erfindungsgemäß vorgesehen, daß innerhalb eines Meßzyklus wenigstens zwei Zeitdifferenzmessungen mittels einer Zeitmeßeinrichtung erfolgen, wobei bei der ersten Messung die Zeit- und/oder Phasendifferenz zwischen einem oder mehreren vorbestimmten Signalpegeln eines der Zeitmeßeinrichtung gegebenen, während der Messung zum Sendesignal phasenstarren Referenzsignals und einem oder mehreren vorbestimmten Signalpegeln eines vom ersten Wandler ausgesendeten, am zweiten Wandler anstehenden Empfangssignals gemessen wird, und daß bei der zweiten Messung beide Wandler in umgekehrtem Betriebsmodus verwendet werden, wobei zur Ermittlung der Durchflußmenge die Differenz der beiden Messungen verwendet wird. Mit diesem erfindungsgemäßen Verfahren werden zum einen die Schwierigkeiten, die sich aus der Simultanbeaufschlagung ergeben, vermieden, da die Wandler nur abwechselnd im jeweiligen Modus betrieben werden. Auf diese Weise werden somit irgendwelche reflexionsbedingten Fehler unterbunden. Zum anderen ist die Ermittlung des Startzeitpunktes, was bei den bisher bekannten Verfahren immer anhand eines vorbestimmten Signalpegels des Empfangssignals erfolgte, durch Verwendung des Referenzsignals als Zeitmeßgrenze wesentlich vereinfacht.

In Weiterbildung der Erfindung kann vorgesehen sein, daß als Signalpegel des Empfangssignals jeweils ein Nulldurchgang verwendet wird, ferner kann erfindungsgemäß vorgesehen sein, daß das Referenzsignal ein digitales Signal ist, dessen Flanke als Signalpegel bei der Zeitdifferenzmessung dient.

Um zu gewährleisten, daß das Empfangssignal mit konstanter Amplitude ansteht, und um die Anstiegszeit des Wandlers zu überbrücken, so daß dieser das Empfangssignal sicher detektiert, kann in weiterer Erfindungsausgestaltung vorgesehen sein, daß der Sendezeitpunkt des Referenzsignals derart gewählt wird, daß das Empfangssignal in eingeschwungenem Zustand am jeweiligen Wandler ansteht. Das Referenzsignal selbst kann, wie erfindungsgemäß ferner vorgesehen sein kann, in Abhängigkeit von dem generatorseitigen Ultraschallsignal gegeben werden. Hierfür hat es sich als äußerst zweckmäßig erwiesen, wenn das Referenzsignal von einer über den Generator angesteuerten, vorzugsweise programmierbaren Zähleinrichtung gegeben wird.

Im Rahmen der Erfindung kann weiterhin vorgesehen sein, daß das Empfangssignal erst nach einer vorbestimmten Zeitverzögerung zur Zeitmeßeinrichtung durchgeschaltet wird, wodurch mit der vorbestimmten Zeitverzögerung beaufschlagte Meßwerte erreicht werden können, so daß die zu messenden Zeitabstände eine endliche Größenordnung besitzen und die Zeitmeßeinrichtung entsprechend großzügig ausgelegt sein kann. Hierfür hat es sich als zweckmäßig erwiesen, daß das Empfangssignal mittels einer in ihrem Schaltverhalten von einer Steuer- und Verarbeitungseinrichtung gesteuerten Torschaltung geschaltet wird. Meßtechnisch vorteilhaft ist ferner, wenn das Empfangssignal zunächst einem Komparator zugeführt und als Digitalsignal weiterverarbeitet wird.

Ein bei abwechselnd sendenden Systemen stets auftretendes Problem besteht ferner darin, daß sich ein fehlerbehaftetes Meßergebnis einstellt, wenn sich zwischen den beiden Messungen die Temperatur des Mediums ändert, da die Absolutlaufzeit des Ultraschalls im Medium temperaturabhängig ist. Bei einer Temperaturerhöhung zwischen den beiden Messungen fällt somit die zweite Laufzeit infolge der Temperaturerhöhung etwas niedriger aus, als dies bei gleicher, bei der ersten Messung herrschender Temperatur der Fall wäre. Wird dann zuerst mit und dann gegen die Strömungsrichtung gemessen, so täuscht die infolge der Temperaturerhöhung etwas niedrigere zweite Zeitverschiebung einen Durchfluß in Strömungsrichtung vor, der sich zum tatsächlichen Durchfluß addiert. Das Meßergebnis würde damit bei der angesprochenen Meßreihenfolge zu groß ausfallen.

Zur Kompensation dieses Meßfehlers kann auf Basis der Erfindung ferner vorgesehen sein, daß die Reihenfolge der Senderichtungen von Meßzyklus zu Meßzyklus vertauscht wird. Dies führt zu folgendem, Meßfehler kompensierenden Verfahrensablauf:

In einem ersten Meßzyklus wird zuerst in, anschließend gegen die Strömung gesendet. Die Laufzeit errechnet sich aus den jeweils gemessenen Zeit- oder Phasenlagen. Ist das zweite Meßergebnis gegenüber dem ersten infolge eines Temperaturgradienten verfälscht, ergeben sich folgende Gleichungen:

$$\text{Meßeffekt}_{\text{real}} = (\text{Meßergebnis 2} + \text{Meßfehler}) - \text{Meßergebnis 1}$$

$$\text{Meßeffekt}_{\text{ideal}} = \text{Meßergebnis 2} - \text{Meßergebnis 1} = \text{Meß effekt}_{\text{real}} - \text{Meßfehler}.$$

In einem zweiten Meßzyklus wird dann in umgekehrter Richtung gemessen, d. h., zuerst gegen, dann mit der Strömung gesendet. Da wiederum die zweite Phasenlage gegenüber der ersten infolge eines Temperaturgradienten verfälscht wird, ergeben sich in diesem Fall folgende Gleichungen:

$$\text{Meßeffekt}_{\text{real}} = \text{Meßergebnis 1} - (\text{Meßergebnis 2} + \text{Meßfehler})$$

$$\text{Meßeffekt}_{\text{ideal}} = \text{Meßergebnis 1} - \text{Meßergebnis 2} = \text{Meßeffekt}_{\text{real}} + \text{Meßfehler}.$$

Der Meßfehler wirkt sich einmal positiv, einmal negativ aus und kürzt sich somit bei beiden Messungen heraus. Auf diese Weise ist eine einfache, meßtechnisch und rechnerisch problemlose Kompensation des vom Temperaturgradienten bedingten Meßfehlers möglich.

Weitere Vorteile, Merkmale und Einzelheiten der Erfindung ergeben sich aus dem im folgenden beschriebenen Ausführungsbeispiel sowie anhand der Zeichnungen. Dabei zeigen:

Fig. 1    eine schematische Darstellung eines beispielhaften Meßaufbaus zur Durchführung des erfindungsgemäßen Verfahrens, und

Fig. 2    eine Darstellung der Signalverläufe einer Sende-Empfangssequenz.

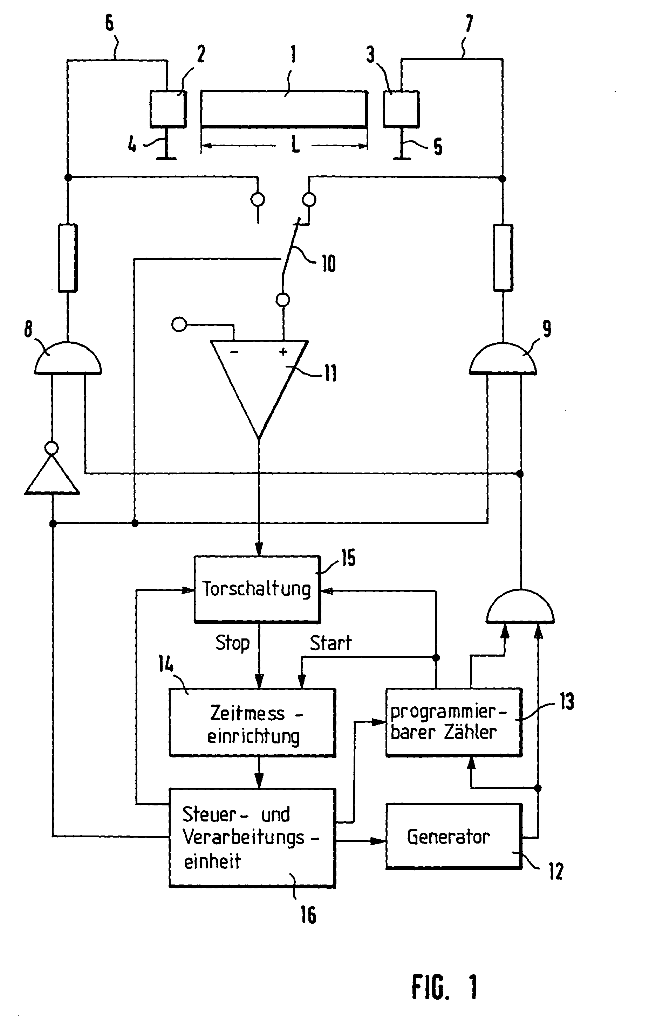

Fig. 1 zeigt eine Meßstrecke 1 vorbestimmter Länge L, an deren Enden je ein stromaufwärts angeordneter Wandler 2 und ein stromabwärts angeordneter Wandler 3 vorgesehen sind. Beide Wandler liegen mit einem Anschluß 4, 5 auf Erdpotential, der jeweils andere Anschluß 6, 7 ist über einen Ankoppelzweig mit einem UND-Glied 8, 9 verbunden. Die Anschlüsse 6, 7 der Wandler 2, 3 sind mit je einem Eingang eines Umschalters 10 verbunden, dessen Ausgang an einer Komparatorschaltung 11 angeschlossen ist. Der Umschalter 10 wird von einem Signal geschaltet, welches je nach seinem logischen Pegel entweder UND-Glied 8 oder UND-Glied 9 auf Durchgang schaltet. Dieses Signal definiert somit, ob mit oder gegen die Strömung gesendet wird.

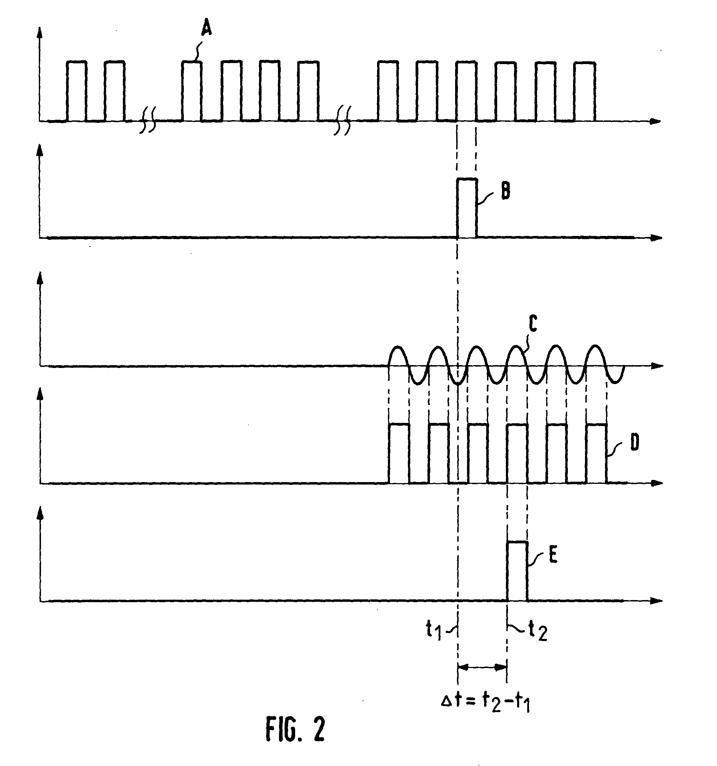

Im ersten Schritt eines Meßzyklus wird der Wandler 2 als Sender, der Wandler 3 als Empfänger betrieben. Mit der Sendefrequenz aus dem Generator 12 wird ein programmierbarer Zähler 13 angesteuert, der die Anzahl der Sendeperioden des Ultraschallsignals steuert. Das Generatorsignal A ist in Fig. 2 dargestellt. Der Zähler 13 generiert ferner ein Referenzsignal B, welches als Startsignal für die nachfolgende Zeitmeßeinrichtung 14 dient. Dieses Signal B wird vorteilhaft zu einem Zeitpunkt generiert, an dem das in Fig. 2 als C gekennzeichnete Empfangssignal in eingeschwungenem Zustand am Wandler 3 anliegt. Wie Fig. 2 zu entnehmen ist, dient die im Zeitpunkt $t_1$ gegebene Flanke des Signals B als Startzeitpunkt für die Zeitmessung.

Über den Umschalter 10 ist das am Wandler 3 anliegende Signal C bereits an die Komparatorschaltung 11 durchgeschaltet. Das digitale Ausgangssignal D der Komparatorschaltung 11 liegt an einer Torschaltung 15 an. Nach Empfang des Startsignals (Referenzsignals) B schaltet die Torschaltung 15 mit einer von einer Steuer- und Verarbeitungseinrichtung 16 vorgegebenen Verzögerung das komparatorseitige Ausgangssignal D zum Zeitpunkt $t_2$ an den Stopp-Eingang der Zeitmeßeinrichtung 14 durch, was durch das Signal E in Fig. 2 dargestellt ist. Wie Fig. 2 zu entnehmen ist, dient auch hier die ansteigende Flanke des Signals E als zeitlicher Detektionszeitpunkt. Die Zeit zwischen Start und Stopp, also zwischen $t_1$ und $t_2$, wird von der Zeitmeßeinrichtung 14 gemessen und in der Steuer- und Verarbeitungseinheit 16 zwischengespeichert.

In einem zweiten Schritt, der erfindungsgemäß möglichst bald, also ca. fünf bis zehn Laufzeiten des Ultraschallsignals durch das Meßrohr auf den ersten Meßschritt folgen sollte, wird die Durchlaufrichtung durch über die Steuer- und Verarbeitungseinheit 16 gesteuertes Schalten des Umschalters 10 umgekehrt. Der programmierbare Zähler 13 wird zurückgesetzt. In einem neuen, zweiten Meßzyklus wird nun der Wandler 3 als Sender, der Wandler 2 als Empfänger betrieben. Das Empfangssignal des Wandlers 2 wird nun über den Umschalter 10 an die Komparatorschaltung 11 angelegt. Deren digitales Ausgangssignal steht am Eingang der Torschaltung 15 an. Abhängig vom Referenzsignal aus dem programmierbaren Zähler 13 und vom Ergebnis der ersten Zeitmessung aus der Steuer- und Verarbeitungseinheit 16 wird die Torschaltung 15 kurz bevor die Stoppflanke zu erwarten ist, auf Durchgang geschaltet. Die Zeitmeßeinrichtung 14 mißt dann den Zeitabstand zwischen dem Referenzsignal, also dem Startsignal und dem durchgeschleiften Stoppsignal. Die Signalfolge im Rahmen des zweiten Meßzyklus entspricht der des in Fig. 2 dargestellten ersten Meßzyklus.

Der in erster Näherung durchflußproportionale Meßeffekt errechnet sich anschließend aus der Differenz zwischen den beiden Zeitmessungen, welche in der Steuer- und Verarbeitungseinheit 16 gebildet wird.

## Patentansprüche

1.  Verfahren zur Ultraschall-Messung von Durchflußmengen von strömenden Fluiden, bei dem zwei in einer Meßstrecke für das strömende Fluid stromauf- und stromabwärts angeordnete kombinierte Sende- und Empfangswandler abwechselnd mit einer mittels eines Generators generierten Ultraschallfrequenz beaufschlagt werden und wechselweise analoge, das Fluid in und gegen die Strömungsrichtung durchlaufende Signale empfangen, anhand welcher im Rahmen von Zeitdifferenzmessungen die Durchflußmenge bestimmt wird, **dadurch gekennzeichnet, daß** innerhalb eines Meßzyklus wenigstens zwei Zeitdifferenzmessungen mittels einer Zeitmeßeinrichtung erfolgen, wobei bei der ersten Messung die Zeit- und/oder Phasendifferenz zwischen einem oder mehreren vorbestimmten Signalpegeln eines der Zeitmeßeinrichtung gegebenen, während der Messung zum Sendesignal phasenstarren Referenzsignals und einem oder mehreren vorbestimmten Signalpegeln eines vom ersten Wandler ausgesendeten, am zweiten Wandler anstehenden Empfangssignals gemessen wird, und daß bei der zweiten Messung beide Wandler in umgekehrtem Betriebsmodus verwendet werden, wobei zur Ermittlung der Durchflußmenge die Differenz der beiden Messungen verwendet wird.

2.  Verfahren nach Anspruch 1, **dadurch gekennzeichnet, daß** als Signalpegel des Empfangssignals jeweils ein Nulldurchgang verwendet wird.

3.  Verfahren nach Anspruch 1 oder 2, **dadurch gekennzeichnet, daß** das Referenzsignal ein digitales Signal ist, dessen Flanke als Signalpegel bei der Zeitdifferenzmessung verwendet wird.

4.  Verfahren nach einem der vorangehenden Ansprüche, **dadurch gekennzeichnet, daß** die zeitliche Lage des Referenzsignals in Bezug auf das Empfangssignal derart gewählt wird, daß das Empfangssignal in eingeschwungenem Zustand am jeweiligen Wandler ansteht.

5.  Verfahren nach einem der vorangehenden Ansprüche, **dadurch gekennzeichnet, daß** das Referenzsignal in Abhängigkeit von dem generatorseitigen Ultraschallsignal gegeben wird.

6.  Verfahren nach Anspruch 5, **dadurch gekennzeichnet, daß** das Referenzsignal von einer über den Generator angesteuerten, vorzugsweise programmierbaren Zähleinrichtung gegeben wird.

7.  Verfahren nach einem der vorangehenden Ansprüche, **dadurch gekennzeichnet, daß** das Empfangssignal erst nach einer vorbestimmte Zeitverzögerung zur Zeitmeßeinrichtung durchgeschaltet wird.

8.  Verfahren nach Anspruch 7, **dadurch gekennzeichnet, daß** das Empfangssignal mittels einer in ihrem Schaltverhalten von einer Steuer- und Verarbeitungseinrichtung gesteuerten Torschaltung geschaltet wird.

**9.** Verfahren nach einem der vorangehenden Ansprüche, **dadurch gekennzeichnet, daß** das Empfangssignal zunächst einem Komparator zugeführt und als Digitalsignal weiterverarbeitet wird.

**10.** Verfahren nach einem der vorangehenden Ansprüche, **dadurch gekennzeichnet, daß** die Reihenfolge der Senderichtungen von Meßzyklus zu Meßzyklus vertauscht wird.

**Claims**

**1.** Method of ultrasonic measurement of flow rate of flowing fluids, in which two combined transmission and reception transformers disposed upstream and downstream in a measuring section for the flowing fluid are acted on alternately with an ultrasound frequency generated by means of a generator and alternately analogue signals passing through the fluid in and against the direction of flow are received, by means of which in the context of time difference measurements the flow rate is determined, **characterised in that** within a measuring cycle at least two time difference measurements are carried out by means of a time measuring device, in which case at the first measurement the time and/or phase difference between one or more predetermined signal levels of a reference signal, which is given to the time measuring device during the measurement and which is phase-rigid to the transmission signal, and one or more predetermined signal levels of a receiving signal transmitted by the first transformer and applied to the second transformer, is measured against the receiving signal applied to the second transformer, and **in that** in the second measurement both transformers are used in reverse operating mode, and in order to determine the flow rate, the difference between the two measurements is used.

**2.** Method according to claim 1, **characterised in that** as a signal level of the receiving signal, in each case a zero crossing is used.

**3.** Method according to claim 1 or 2, **characterised in that** the reference signal is a digital signal whose side is used as a signal level in measuring the time difference.

**4.** Method according to one of the preceding claims, **characterised in that** the time position of the reference signal relative to the receiving signal is so selected that the receiving signal in the steady state is applied to the respective transformer.

**5.** Method according to one of the preceding claims, **characterised in that** the reference signal is determined as a function of the ultrasound signal of the generator.

**6.** Method according to claim 5, **characterised in that** the reference signal is determined by a counter which is triggered via the generator and which is preferably programmable.

**7.** Method according to one of the preceding claims, **characterised in that** the receiving signal is only switched through to the time measuring device after a predetermined time delay.

**8.** Method according to claim 7, **characterised in that** the receiving signal is switched by means of a gate circuit whose switching behaviour is controlled by means of a control and processing device.

**9.** Method according to one of the preceding claims, **characterised in that** the receiving signal is first fed to a comparator and is further processed as a digital signal.

**10.** Method according to one of the preceding claims, **characterised in that** the sequence of transmission directions is reversed from one measuring cycle to another.

**Revendications**

**1.** Procédé de mesure par ultrasons de débits de fluides en écoulement, selon lequel deux transducteurs d'émission et de réception combinés, disposés en amont et en aval dans un parcours de mesure pour le fluide en écoulement, sont alimentés alternativement avec une fréquence ultrasonore générée par un générateur, et captent de manière alternée des signaux analogiques, qui traversent le fluide dans la direction d'écoulement et à l'encontre de cette direction d'écoulement, et à l'aide desquels est déterminé le débit dans le cadre de mesures de différence de temps, **caractérisé en ce qu'**à l'intérieur d'un cycle de mesure, on effectue au moins deux mesures de différence de temps au moyen d'un dispositif de mesure de temps, la première mesure consistant à mesurer la différence de temps et/ou de phase entre un ou plusieurs niveaux de signal prédéterminés d'un signal de référence fourni au dispositif de mesure de temps et fixe en phase par rapport au signal d'émission durant la mesure, et un ou plusieurs niveaux de signal prédéterminés d'un signal de réception présent au niveau du second transducteur et émis du premier transducteur, et **en ce que** lors de la seconde mesure, les deux transducteurs sont utilisés selon un mode de fonctionnement inverse, la différence entre les deux mesures étant utilisée pour la détermination du débit.

2. Procédé selon la revendication 1, **caractérisé en ce qu'**en guise de niveau de signal du signal de réception, on utilise respectivement un passage par zéro.

3. Procédé selon la revendication 1 ou 2, **caractérisé en ce que** le signal de référence est un signal numérique dont le flanc est utilisé en tant que niveau de signal pour la mesure de la différence de temps.

4. Procédé selon l'une des revendications précédentes, **caractérisé en ce que** la position dans le temps du signal de référence par rapport au signal de réception, est choisie de façon à ce que le signal de réception soit présent en régime permanent dans le transducteur respectif.

5. Procédé selon l'une des revendications précédentes, **caractérisé en ce que** le signal de référence est fourni en fonction du signal ultrasonore en provenance du générateur.

6. Procédé selon la revendication 5, **caractérisé en ce que** le signal de référence est fourni par un dispositif de comptage de préférence programmable, qui est commandé par l'intermédiaire du générateur.

7. Procédé selon l'une des revendications précédentes, **caractérisé en ce que** le signal de réception n'est commuté vers le dispositif de mesure de temps, qu'après un retard prédéterminé.

8. Procédé selon la revendication 7, **caractérisé en ce que** le signal de réception est commuté au moyen d'un circuit de porte commandé quant à son comportement de commutation, par un dispositif de commande et de traitement.

9. Procédé selon l'une des revendications précédentes, **caractérisé en ce que** le signal de réception est tout d'abord amené à un comparateur, son traitement étant poursuivi en tant que signal numérique.

10. Procédé selon l'une des revendications précédentes, **caractérisé en ce que** l'ordre des directions d'émission est permuté de cycle de mesure en cycle de mesure.

FIG. 1

FIG. 2